# EUROPÄISCHE PATENTSCHRIFT

(11) **EP 3 457 856 B1**
(45) Veröffentlichungstag und Bekanntmachung des Hinweises auf die Patenterteilung: **20.01.2021**
(21) Anmeldenummer: 18714246.8
(22) Anmeldetag: 29.03.2018
(51) Int. Cl.: A21B 3/15, D21H 27/02, D21H 27/06, H01F 7/02

(54) **BACKUNTERLAGE**
BAKING SUBSTRATE
SUPPORT DE CUISSON

(30) Priorität: 04.04.2017 DE 202017101994 U
(43) Veröffentlichungstag der Anmeldung: 27.03.2019
(73) Patentinhaber: Cofresco Frischhalteprodukte GmbH & Co. KG, 32427 Minden (DE)
(72) Erfinder: ARNING, Hans-Jürgen, 32312 Lübbecke (DE)
(74) Vertreter: Dantz, Jan Henning
(86) Internationale Anmeldenummer: PCT/EP2018/058045
(87) Internationale Veröffentlichungsnummer: WO 2018/184967

(56) Entgegenhaltungen:
- EP-A1- 2 002 723
- EP-A1- 2 878 201
- EP-A1- 2 984 933
- DE-B3-102005 047 257
- DE-U1- 29 909 559
- US-A- 5 520 945
- US-A- 5 921 173

## Beschreibung

Die vorliegende Erfindung betrifft eine blattförmige Backunterlage aus einem blattförmigen Material nach dem Oberbegriff des Anspruches 1.

In der EP 2 044 842 B1 ist eine Backunterlage offenbart, die Profilierungen in Form von gewölbten Erhebungen und Vertiefungen aufweist, die beidseitig eingeprägt sind. Dadurch kann das Backgut an der Oberseite der Profilierungen aufliegen und durch die Zwischenräume der Profilierungen noch belüftet werden. Solche Backunterlagen haben sich an sich bewährt, allerdings sind für den Benutzer Oberseite und Unterseite kaum unterscheidbar, und die Backunterlage kann auf einer Auflage leicht verrutschen.

Um die Rutschfestigkeit einer Backunterlage zu erhöhen, wird in der EP 2 984 933 A1 vorgeschlagen, an der Unterseite zumindest bereichsweise eine rutschhemmende Beschichtung aus einem Elastomer aufzubringen. Die rutschhemmende Beschichtung verstärkt dabei das blattförmige Material, das dadurch etwas steifer wird. Als blattförmiges Material wird ein Papier oder eine Folie eingesetzt, das eine glatte Oberfläche ausbildet und somit eine Belüftung eines Gargutes an der Unterseite nicht erreicht wird.

In der DE 10 2005 047 257 B3 ist ein Backblech aus Metall offenbart, das an seiner Unterseite Kontaktelemente aus Silikon als Rutschsicherung aufweist. Ein ähnliches Backblech ist auch in der EP 2 878 201 A1 gezeigt.

Die US 5,921,173 offenbart eine geprägte Backunterlage aus Metall.

Die DE 299 09 559 U1 offenbart eine Unterlage für Teigwaren, die aus einem Verbundmaterial hergestellt ist, das Papierlagen und eine mittlere Sperrschicht aus fettdichtem Material aufweist. Zudem ist an der Oberseite und der Unterseite eine vollflächige Silikonschicht vorgesehen.

Die EP 2 002 723 A1 offenbart einen Gargutträger mit einer Einlage aus Krepppapier, die mit einer Haftbeschichtung versehen ist.

Es ist daher Aufgabe der vorliegenden Erfindung, eine Backunterlage aus einem blattförmigen Material zu schaffen, die eine verbesserte Handhabung beim Backen ermöglicht.

Diese Aufgabe wird mit einer blattförmigen Backunterlage mit den Merkmalen des Anspruches 1 gelöst.

Die erfindungsgemäße Backunterlage besteht aus einem blattförmigen Material, das an einer Oberseite eine geprägte Strukturierung, beispielsweise Wölbungen oder Kalotten, aufweist, die bei einer Anlage eines Backgutes eine Belüftung der nicht anliegenden Bereiche, der Täler oder Vertiefungen an der Oberseite, ermöglicht. Die Unterseite, die aufgrund der blattförmigen Ausgestaltung der Backunterlage eine ähnliche geprägte Strukturierung aufweist wie die Oberseite, ist zumindest bereichsweise glatt, also eben, ausgebildet, wobei zumindest die glatten Bereiche wenigstens bereichsweise mit einer Antirutschbeschichtung versehen sind. Dadurch kann bei Auflage der Backunterlage der glatte Bereich mit der Antirutschbeschichtung für eine verbesserte Haftung sorgen, da eine flächige Anlage auf einem Untergrund möglich ist. Dies führt zu einer optimierten Handhabung, da die Backunterlage vergleichsweise rutschfest auf einer Unterlage abgelegt werden kann und dennoch die Vorteile der geprägten Strukturierung an der Oberseite besitzt.

Vorzugsweise weist die Antirutschbeschichtung ein Silikon und/oder ein Elastomer auf, was besonders gute Haftungseigenschaften auf einem Backblech oder einer Arbeitsunterlage besitzt.

Die Antirutschbeschichtung an der Unterseite kann optional nur an den glatten Bereichen vorgesehen sein, so dass die strukturierten Bereiche, die benachbart zu den glatten Bereichen vorgesehen sind, unbeschichtet sind. Dies ermöglicht das Einsparen von Material, da nur diejenigen Bereiche mit der Antirutschbeschichtung versehen werden, die auch für eine verbesserte Haftung sorgen. Die glatten Bereiche sind an der Unterseite auch die bezogen auf die Backunterlage untersten Bereiche, und die geprägte Strukturierung erstreckt sich dann ausschließlich nach oben. Die Prägung der Backunterlage ist dann nur noch einseitig eingebracht, also von einer Unterseite, die glatt oder eben ausgebildet ist, nach oben hin. Die Begriffe "oben" und "unten" beziehen sich dabei auf den üblichen Einsatz der Backunterlage, die eine definierte Ober- und Unterseite besitzt.

Die Antirutschbeschichtung an der Unterseite kann in unterschiedlichen Formen aufgebracht werden, beispielsweise in Streifen, Punkten oder als Gitter. Die glatten Bereiche an der Unterseite können für sich genommen jeweils eine Fläche von mindestens 1 mm², vorzugsweise mindestens 4 mm², aufweisen, um eine flächige Anlage auf einem Untergrund zu ermöglichen.

Falls eine vollflächige Beschichtung an der Unterseite aufgebracht wird, muss eine Auftragsmenge von 2 bis 10 g/m² aufgetragen werden, wobei ein Teil der aufgebrachten Beschichtung aufgrund der geprägten Strukturierung der Backunterlage nicht in Kontakt mit einer Auflage kommen wird. Dennoch ist eine vollflächige Beschichtung der Antihaft-Beschichtung zur Vereinfachung der Herstellung möglich.

Das blattförmige Material besteht vorzugsweise aus einem Papier, insbesondere einem geprägten Pergamentpapier oder Pergamentersatzpapier. Es ist auch möglich, als blattförmiges Material einen Vliesstoff, eine Metallfolie, insbesondere Aluminiumfolie, oder mehrlagige Verbundmaterialien einzusetzen. Vorzugsweise weist das verwendete Papier ein Flächengewicht zwischen 30 bis 55 g/m², insbesondere 35 bis 45 g/m², auf und kann optional zumindest auf der Oberseite mit einer dünnen Silikonschicht von 0,4g/m² bis 0,6 g/m² ausgerüstet sein, die eine Antihaftfunktion bewirkt.

Für ein gezieltes Beschichten der Backunterlage auf der Unterseite kann die Antirutschbeschichtung aufgedruckt sein, vorzugsweise in einem diskreten Muster. Optional kann die Beschichtung an der Unterseite auch ein magnetisches Material aufweisen, beispielsweise ein magnetisiertes Eisenpulver, um ein Anhaften an einem Backblech zu verbessern.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht einer erfindungsgemäßen Backunterlage im Einsatz;
- Figuren 2 bis 5: mehrere Ansichten einer Unterseite unterschiedlicher Ausführungsbeispiele von Backunterlagen, und
- Figuren 6 bis 8: mehrere schematische Detailansichten unterschiedlicher Backunterlagen bei der Anlage an einer Auflage.

Eine Backunterlage 1 umfasst ein blattförmiges Material, das wahlweise von einer Rolle abwickelbar ist oder als fertiger Zuschnitt auf der Rolle oder als Einzelbogen gefaltet vorliegen kann. Das blattförmige Material besteht vorzugsweise aus einem Papier, insbesondere einem Pergamentpapier, kann aber auch aus einem Vliesstoff, einer Metallfolie oder einem Verbundmaterial hergestellt sein. Die Backunterlage 1 umfasst eine Oberseite 2, auf die ein Gargut auflegbar ist, und eine Unterseite 3, die auf ein Backblech oder einen anderen Gargutträger auflegbar ist. An der Unterseite 3 sind zwei Streifen 4 mit einer Antirutschbeschichtung vorgesehen, die ein verbessertes Anhaften der Backunterlage 1 an einer Auflage bewirken.

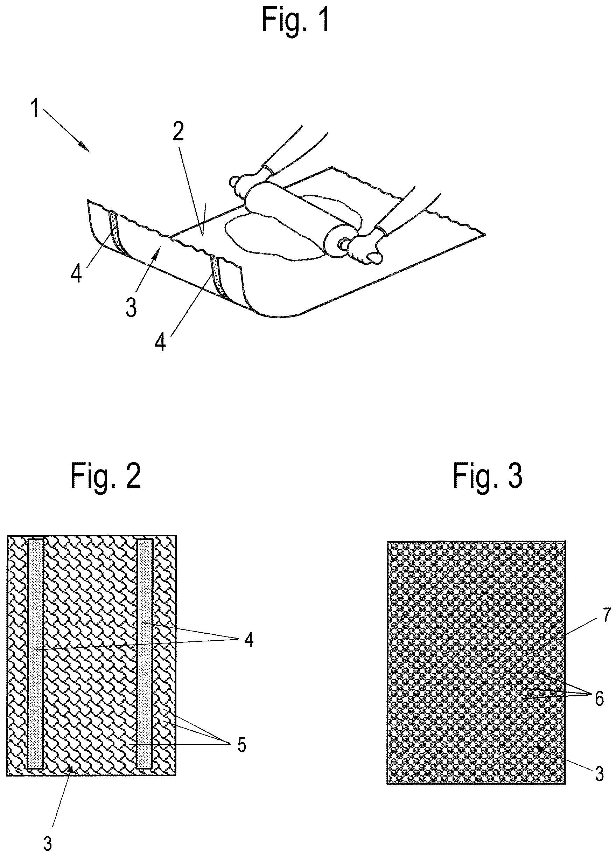

In Figur 2 ist die Unterseite 3 der Backunterlage 1 gezeigt. An der Unterseite sind zwischen den beiden in Längsrichtung verlaufenden Streifen 4 wabenförmige Prägungen 5 erkennbar, die durch eine geprägte Strukturierung hergestellt sind. Die Prägung 5 führt zu einer nicht ebenen Oberfläche der Backunterlage 1, die eine verbesserte Belüftung eines Backgutes an der Unterseite ermöglicht. An der Unterseite ist die Backunterlage 1 dennoch über die ebenen Streifen 4 rutschfest auf einer Unterlage ablegbar.

In Figur 3 ist eine Unterseite 3 einer Backunterlage gezeigt, bei der an der Unterseite keine Streifen 4 vorgesehen sind, sondern nur eine Strukturierung 6, in Form von Wölbungen, Kalotten oder anderen Geometrien, wobei zwischen der Strukturierung 6 ebene Bereiche 7 vorgesehen sind. Die Profilierung erstreckt sich somit nicht vollflächig über die Fläche der Backunterlage 1, sondern nur in voneinander zumindest bereichsweise beabstandeten Bereichen, und zwischen den Strukturierungen 6 sind ebene oder glatte Bereiche vorgesehen. Diese ebenen, glatten Bereiche sind mit einer Antirutschbeschichtung beschichtet, um ein verbessertes Haften der Backunterlage an einer Auflage zu gewährleisten.

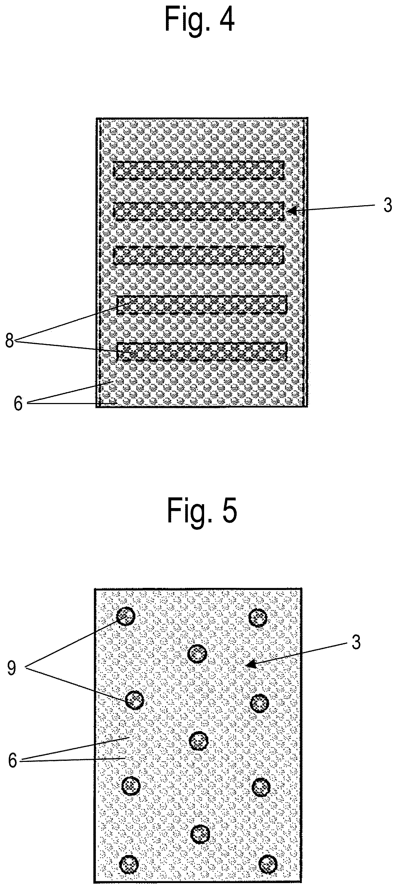

In Figur 4 ist ein weiteres Ausführungsbeispiel einer Backunterlage gezeigt, bei der an der Unterseite 3 zusätzlich zu der in Figur 3 bereits gezeigten Strukturierung Querstreifen 8 vorgesehen sind, die durch eine Antirutschbeschichtung hergestellt sind.

In Figur 5 ist die Backunterlage der Figur 3 dahingehend abgewandelt, dass zusätzlich Punkte 9 vorgesehen sind, die durch eine Antirutschbeschichtung hergestellt sind. Es können auch andere Geometrien statt Streifen oder Kreise für die Antirutschbeschichtung eingesetzt werden, beispielsweise eine Gitterstruktur.

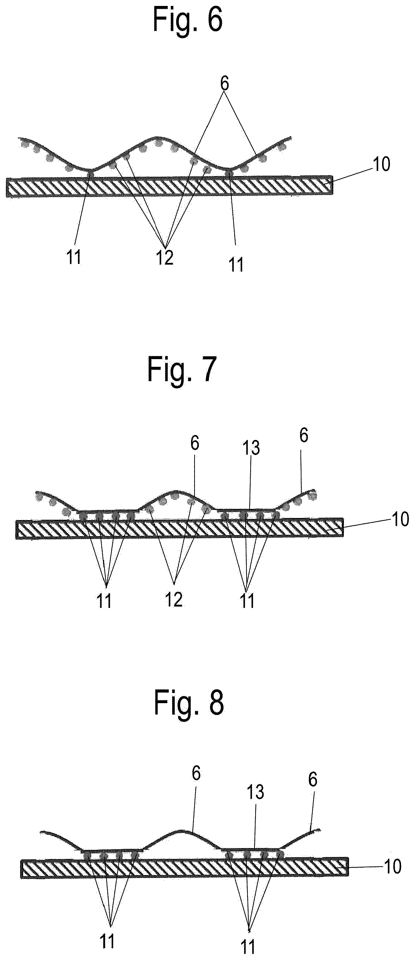

Bei einer nicht erfindungsgemäßen Backunterlage gemäß Figur 6 ist eine Strukturierung 6 vorgesehen, die sich durchgängig über die gesamte Fläche der Backunterlage erstrecken, beispielswiese wie diese in der EP 2 044 842 B1 gezeigt sind. Durch das beidseitige Verprägen ergibt sich eine Wellenstruktur. Wenn die dargestellte wellenförmige Backunterlage an der Unterseite beschichtet ist, bilden nur wenige Punkte eine Antirutschbeschichtung 11 aus, nämlich diejenigen Punkte, die auf der Auflage 10 aufliegen. Die übrigen Beschichtungspunkte 12 sind beabstandet von der Auflage 10 angeordnet und können somit keinen Beitrag zur Verbesserung der Hafteigenschaften leisten. Bei einer erfindungsgemäßen Backunterlage, wie sie in Figur 7 gezeigt ist, befinden sich daher zwischen den gewölbten Strukturierungen 6 glatte Bereiche 13, die für eine vergrößerte Anlagefläche auf der Auflage 10 sorgen. Eine an der Unterseite angeordnete Beschichtung ist in den ebenen Bereichen als Antirutschbeschichtung 11 ausgebildet, wobei die Fläche der Antirutschbeschichtung 11 an den ebenen Bereichen 13 mindestens 1 mm², vorzugsweise mehr als 4 mm², beträgt. Zwischen den ebenen Bereichen 13 sind die gewölbten Strukturierungen 6 angeordnet, und die Beschichtungspunkte 12 sind beabstandet von der Auflage 10 vorgesehen.

In einem weiteren erfindungsgemäßen Ausführungsbeispiel einer Backunterlage sind gemäß Figur 8 nur die ebenen Bereiche mit einer Antirutschbeschichtung 11 versehen, während die gewölbte Strukturierung 6 an der Unterseite unbeschichtet ist. Dadurch kann mit geringem Materialeinsatz eine verbesserte Haftung an der Auflage 10 erreicht werden, da nur die an der Auflage 10 anliegenden Bereiche mit der Antirutschbeschichtung 11 versehen sind. Die Antirutschbeschichtung 11 umfasst ein Silikon- oder ein anderes Elastomer, um die Hafteigenschaften zu verbessern. Wenn die Antirutschbeschichtung vollflächig aufgetragen wird, wie dies in Figur 7 gezeigt ist, wird die Antirutschbeschichtung in einer Auftragsmenge von 5 bis 20 g/m² aufgetragen. Falls der Auftrag nur an den glatten Bereichen 13 erfolgt, wie dies in Figur 8 gezeigt ist, kann die Auftragsmenge auf beispielswiese 1 bis 4 g/m², insbesondere 1,5 bis 2,5 g/m², reduziert werden, ohne dass dies nachteilige Auswirkungen auf das Haftverhalten hätte.

Ausführungsbeispiel für eine Backunterlage:
Ein voll- oder teilflächig geprägtes Pergamentersatzpapier mit einem Flächengewicht von 35 bis 50 g/m², vorzugsweise 39 bis 41 g/m², ist oberseitig silikonisiert, wobei die Beschichtung aus Platin-Silikon mit einem Flächengewicht von ca. 0,3 bis 1 g/m², vorzugsweise 0,4 bis 0,6 g/m², besteht. Die Unterseite ist voll- oder teilflächig mit einem Kunststoffmaterial beschichtet. Das Kunststoffmaterial besteht vorzugsweise aus einem Silikonelastomer und weist eine weiche, elastische und glatte Oberfläche auf. Dadurch ergibt sich eine gute Haftung auf Zellulose (Papier) sowie auf anderen Substraten, wie beispielsweise Metall oder Kunststoff. Das so beschichtete Pergamentersatzpapier weist eine Temperaturbeständigkeit von größer als 220° C auf. Die Beschichtungsmenge wird so gewählt, dass die Zellulosefasern auf den beschichteten Bereichen mit einem durchgehenden Silikonelastomerfilm bedeckt sind, wozu bei Papierprodukten eine Auftragsmenge von 5 bis 20 g/m² erforderlich ist. Bei glatten, nichtfaserigen (nicht aufsaugenden) Substraten, wie Kunststoffen oder Aluminiumfolien, kann eine kleinere Auftragskonzentration zur Erzielung des Effektes ausreichen. Es kann anstelle eines Silikons auch ein anderes Elastomer mit den oben beschriebenen Eigenschaften eingesetzt werden.

Optional kann abweichend von dem obigen Ausführungsbeispiel auch ein Beschichtungsmaterial mit einem Anteil von 20 % bis 80 % eines permanentmagnetischen oder magnetisierbaren Materials eingesetzt werden, welches eine semi-permanente Haftung der Backunterlage auf magnetisierbaren Materialien, wie Eisen oder Stahl, bewirkt.

Der Anteil der glatten Bereiche 13 an der Backunterlage 1 bezogen auf die Gesamtfläche kann beispielsweise zwischen 5 % bis 80 %, insbesondere 50 % bis 70 %, betragen.

### Bezugszeichenliste

- 1: Backunterlage
- 2: Oberseite
- 3: Unterseite
- 4: Streifen
- 5: Prägung
- 6: Profilierung
- 7: Bereich
- 8: Querstreifen
- 9: Punkte
- 10: Auflage
- 11: Antirutschbeschichtung
- 12: Beschichtungspunkt
- 13: Bereich

## Patentansprüche

1. Blattförmige Backunterlage (1) aus einem blattförmigen Material, das an einer Oberseite (2) eine geprägte Strukturierung (6) aufweist, die mit einer Antihaft-Beschichtung versehen ist, wobei an der Oberseite (2) Auswölbungen zur Reduzierung der an einem Backgut anliegenden Fläche vorgesehen sind, **dadurch gekennzeichnet, dass** eine Unterseite (3) zumindest bereichsweise glatt ausgebildet ist und zumindest die glatten Bereiche (13) wenigstens bereichsweise eine Antirutschbeschichtung (11) aufweisen.

2. Backunterlage nach Anspruch 1, **dadurch gekennzeichnet, dass** die Antirutschbeschichtung (11) ein Silikon- und/oder ein anderes Elastomer aufweist.

3. Backunterlage nach Anspruch 1 oder 2, **dadurch gekennzeichnet, dass** die Antirutschbeschichtung (11) an der Unterseite (3) nur an glatten Bereichen (13) vorgesehen ist und die strukturierten Bereiche im Wesentlichen unbeschichtet sind.

4. Backunterlage nach einem der vorhergehenden Ansprüche, **dadurch gekennzeichnet, dass** die Antirutschbeschichtung (11) an der Unterseite (3) in Form von Streifen, Punkten oder als Gitter aufgebracht ist.

5. Backunterlage nach einem der vorhergehenden Ansprüche, **dadurch gekennzeichnet, dass** jeder glatte Bereich (13) eine Fläche von mindestens 1 mm², vorzugswiese mindestens 4 mm², aufweist.

6. Backunterlage nach einem der vorhergehenden Ansprüche, **dadurch gekennzeichnet, dass** an der Unterseite (3) eine vollflächige Beschichtung mit einer Auftragsmenge von 1 bis 10 g/m² vorgesehen ist.

7. Backunterlage nach einem der vorhergehenden Ansprüche, **dadurch gekennzeichnet, dass** das blattförmige Material aus einem Papier, insbesondere einem geprägten Pergamentersatzpapier, hergestellt ist.

8. Backunterlage nach Anspruch 7, **dadurch gekennzeichnet, dass** das Papier ein Flächengewicht zwischen 30 bis 55 g/m², insbesondere 35 bis 45 g/m², aufweist.

9. Backunterlage nach einem der vorhergehenden Ansprüche, **dadurch gekennzeichnet, dass** die Antirutschbeschichtung (11) aufgedruckt ist.

10. Backunterlagen nach einem der vorhergehenden Ansprüche, **dadurch gekennzeichnet, dass** eine Antihaft-Beschichtung an der Oberseite (2) in einer Menge zwischen 0,3 bis 1 g/m², insbesondere 0,4 bis 0,6 g/m², aufgebracht ist.

11. Backunterlage nach einem der vorhergehenden Ansprüche, **dadurch gekennzeichnet, dass** an der Unterseite (3) in der Antirutschbeschichtung (11) ein magnetisches Material vorgesehen ist.

12. Backunterlage nach einem der vorhergehenden Ansprüche, **dadurch gekennzeichnet, dass** die Temperaturbeständigkeit der Backunterlage (1) mindestens 220° C beträgt.

## Claims

1. Sheet-type baking substrate (1) consisting of a sheet-type material which has, on an upper side (2), an embossed structuring (6) that is provided with a non-stick coating, whereby bumps are provided on the upper side (2) in order to reduce the surface area that bears against a product to be baked **characterized in that** an underside (3) is smooth at least in some regions, and at least the smooth regions (13) have a non-slip coating (11) at least in some areas.

2. Baking substrate according to claim 1, **characterized in that** the non-slip coating (11) comprises a silicone elastomer and/or another elastomer.

3. Baking substrate according to any one of claims 1 or 2, **characterized in that** the non-slip coating (11) is provided on the underside (3) only on smooth regions (13), and the structured regions are substantially uncoated.

4. Baking substrate according to any one of the preceding claims, **characterized in that** the non-slip coating (11) is applied to the underside (3) in the form of strips, spots or as a grid.

5. Baking substrate according to any one of the preceding claims, **characterized in that** each smooth region (13) has a surface area of at least 1 mm², preferably at least 4 mm².

6. Baking substrate according to any one of the preceding claims, **characterized in that** a coating is provided across the entire surface of the underside (3) in an application amount of 1 to 10 g/m².

7. Baking substrate according to any one of the preceding claims, **characterized in that** the sheet-type material is made from a paper, in particular an embossed greaseproof paper.

8. Baking substrate according to claim 7, **characterized in that** the paper has a weight per unit area of between 30 to 55 g/m², in particular 35 to 45 g/m².

9. Baking substrate according to any one of the preceding claims, **characterized in that** the non-slip coating (11) is applied by printing.

10. Baking substrate according to any one of the preceding claims, **characterized in that** a non-stick coating is applied to the upper side (2) in an amount between 0.3 to 1 g/m², in particular 0.4 to 0.6 g/m².

11. Baking substrate according to any one of the preceding claims, **characterized in that** a magnetic material is provided on the underside (3) in the non-slip coating (11).

12. Baking substrate according to any one of the preceding claims, **characterized in that** the temperature resistance of the baking substrate (1) is at least 220°C.

## Revendications

1. Support de cuisson en forme de feuille (1), réalisé en un matériau en forme de feuille dont le côté supérieur (2) a une structure imprimée (6) munie d'un revêtement antiadhérent,
le côté supérieur (2) comportant des parties bombées pour réduire la surface en contact avec le produit à cuire,
support **caractérisé en ce que**
le côté inférieur (3) est lisse, au moins par zones, et au moins les zones lisses (13) ont au moins par zones, un revêtement anti-glissement (11).

2. Support de cuisson selon la revendication 1,
**caractérisé en ce que**
le revêtement anti-glissement (11) comporte du silicone ou/et un autre élastomère.

3. Support de cuisson selon la revendication 1 ou 2,
**caractérisé en ce que**
le revêtement anti-glissement (11) est prévu sur le côté inférieur (3) sur des zones lisses (13), les zones structurées étant pratiquement non revêtues.

4. Support de cuisson selon l'une des revendications précédentes,
**caractérisé en ce que**
le revêtement anti-glissement (11) est appliqué contre le côté inférieur (3) sous la forme de bandes, de points ou de grilles.

5. Support de cuisson selon l'une des revendications précédentes,
**caractérisé en ce que**
chaque zone lisse (13) a une surface d'au moins 1 mm², et de préférence au moins égale à 4 mm².

6. Support de cuisson selon l'une des revendications précédentes,
**caractérisé en ce que**
le côté inférieur (3) a un revêtement sur toute la surface avec une application d'une quantité de 1 à 10 g/m².

7. Support de cuisson selon l'une des revendications précédentes,
**caractérisé en ce que**
la matière en forme de feuille est en un papier, notamment en un papier parchemin imprimé.

8. Support de cuisson selon la revendication 7,
**caractérisé en ce que**
le papier a une densité surfacique comprise entre 30 et 55g/m², notamment entre 35 et 45 g/m².

9. Support de cuisson selon l'une des revendications précédentes,
**caractérisé en ce que**
le revêtement anti-glissement (11) est imprimé.

10. Support de cuisson selon l'une des revendications précédentes,
**caractérisé en ce que**
un revêtement antiadhérent est appliqué sur le côté supérieur (2) suivant une quantité comprise entre 0,3 et 1 g/m², notamment entre 0,4 et 0,6 g/m².

11. Support de cuisson selon l'une des revendications précédentes,
**caractérisé en ce que**
le côté inférieur (3) comporte une matière magnétique dans le revêtement anti-glissement (11).

12. Support de cuisson selon l'une des revendications précédentes,
**caractérisé en ce que**
la tenue en température du support de cuisson (1) est au moins de 220°C.
